# EUROPÄISCHE PATENTSCHRIFT

(11) **EP 2 146 418 B1**
(45) Veröffentlichungstag und Bekanntmachung des Hinweises auf die Patenterteilung: **20.07.2011**
(21) Anmeldenummer: 09006053.4
(22) Anmeldetag: 02.05.2009
(51) Int. Cl.: H02K 3/50, H02K 15/00

(54) **Elektrischer Generator für die Stromgewinnung in Kraftwerken sowie Sanierverfahren**
Electrical generator for generating electricity in power plants and renovation method
Générateur électrique pour la production d'électricité dans des centrales et procédé d'assainissement

(30) Priorität: 18.07.2008 DE 102008033711
(43) Veröffentlichungstag der Anmeldung: 20.01.2010
(73) Patentinhaber: Sensoplan Aktiengesellschaft, 79801 Hohentengen (DE)
(72) Erfinder: Preiser, Claus Dipl.-Ing. (BA), 79761 Waldhut-Tiengen (DE); Schoellhorn, Karls Prof. Dr.-Ing., 5242 Birr (CH); Ulriksen, Nils Dipl.-Ing. (FH), 79774 Albbruck-Albert (DE)
(74) Vertreter: Goy, Wolfgang

(56) Entgegenhaltungen:
- EP-A1- 0 418 530
- EP-A2- 0 633 644
- DE-B- 1 006 949
- DE-B- 1 011 047
- DE-B- 1 053 092
- DE-U- 1 939 198
- TIMPERLEY J E: "Generator upgrade without stator rewinding" ELECTRICAL INSULATION CONFERENCE AND ELECTRICAL MANUFACTURING & COIL W INDING CONFERENCE, 1999. PROCEEDINGS CINCINNATI, OH, USA 26-28 OCT. 1999, PISCATAWAY, NJ, USA,IEEE, US LNKD- DOI:10.1109/EEIC.1999.826280, 26. Oktober 1999 (1999-10-26), Seiten 617-618, XP010372278 ISBN: 978-0-7803-5757-0
- SCH¦NINGER J: "POWER PLANT SERVICE - A NEW CONCEPT FOR FASTER RETROFITTING OF TURBOGENERATORS" ABB REVIEW, ABB ASEA BROWN BOVERI, ZURICH, CH, Nr. 10, 1. Januar 1995 (1995-01-01), Seiten 23-30, XP000550477 ISSN: 1013-3119

## Beschreibung

Die Erfindung betrifft einen elektrischen Generator für die Stromgewinnung in Kraftwerken nach dem Oberbegriff des Anspruchs 1; die Erfindung betrifft ferner ein Verfahren zum Sanieren des Wickelkopfes des Stators eines elektrischen Generators für die Stromgewinnung in Kraftwerken nach dem Oberbegriff des Anspruchs 6.

Es wird bei der Erfindung von Turbogeneratoren für die Stromgewinnung in Kraftwerken im Leistungsbereich zwischen ca. 400 und 1.000 MVA ausgegangen. Die Zweischichtwicklung derartiger 2-poliger Turbogeneratoren besteht aus Wicklungsstäben, nämlich aus Oberlagestäben und Unterlagestäben, deren Stabenden im Wickelkopf elektrisch miteinander verbunden sind. Dazu werden die Wicklungsstäbe und damit die Stabenden in der Regel über eine Evolventenform in die geometrisch richtige Lage gebracht. Daraus resultiert eine ausgedehnte, korbförmige Struktur des Wickelkopfes, die im Betrieb, vor allem aber auch in Störfällen hohen elektromagnetischen Kräften ausgesetzt ist. Um für diese Fälle Verformungen des Wickelkopfes vorzubeugen, wird vielfach um den Außendurchmesser der Unterlagestäbe ein Stützring angeordnet. Dieser liegt auf den Stäben auf und wirkt einer unzulässigen radialen Aufweitung entgegen.

Die elektrische Verbindung der Wicklungsstäbe am Stabende sieht eine Abdeckung in Form einer sogenannten Stabendkappe vor, die als elektrische Isolierung der mechanischen Verbindungsteile dient. Diese Abdeckung ragt meist über den Außendurchmesser der Unterlagestäbe der Wicklungsstäbe hinaus. Dies bedeutet, daß beim Neubau der Generatoren zuerst der Stützring montiert wird, bevor die Stabendkappen eingeklebt und mit den Wicklungsstäben vergossen werden.

Diese Bauweise verhindert einen nachträglichen Ausbau der Stabendkappen und damit des Stützringes als Ganzes. Wird also zu einem späteren Zeitpunkt eine Reparatur am Wickelkopf derart notwendig, daß der Zugang zur Reparaturstelle nur durch Ausbau des Stützringes erfolgen kann, muß der Stützring für den Ausbau zerstört werden. Für den Wiedereinbau ist deshalb eine andersartige Konstruktion erforderlich als beim Einbau.

Ein Generator gemäß dem Prëambul des Anspruch 1 ist aus EP 0 633 644 bekannt.

Der Erfindung liegt die **Aufgabe** zugrunde, bei einem elektrischen Generator für die Stromgewinnung in Kraftwerken der eingangs angegebenen Art einen verbesserten Stützring zu schaffen, welcher insbesondere dann eingesetzt werden kann, wenn der Wickelkopf des Stators des elektrischen Generators saniert und dabei der alte Stützring entfernt werden muß und dabei zerstört wird; ferner soll ein Sanierungsverfahren für einen derartigen elektrischen Generator geschaffen werden.

Die technische **Lösung** bei einem elektrischen Generator für die Stromgewinnung in Kraftwerken ist gekennzeichnet durch die Merkmale im Kennzeichen des Anspruchs 1.

Dadurch ist ein geteilter und nachspannbarer Stützring für elektrische Generatoren für die Stromgewinnung in Kraftwerken im Bereich des Wickelkopfes geschaffen, welcher sehr leicht handhabbar ist und der vor allem die Möglichkeit schafft, nach der Reparatur des Generators auf technisch einfache Weise nachträglich eingebaut werden zu können. Die Grundidee des erfindungsgemäßen Stützringes besteht darin, daß er aus einzelnen Ringsegmenten zusammengesetzt ist. Dadurch ist es möglich, daß der Stützring auch dann am Wikkelkopf montiert werden kann, wenn die Stabendkappe über die Unterlagestäbe der Wicklungsstäbe radial übersteht und ein Stützring aus einem Stück aufgrund der Durchmesserverhältnisse nicht angebracht werden kann. Die einzelnen Ringsegmente des Stützringes werden dabei als Einzelteile gefertigt, dann über Paßstifte zum Stützring bzw. zu Teilringen miteinander verbunden, um sie dann in einer Karusselldrehbank auf Endmaß zu drehen. Anschließend werden der Stützring bzw. die Teilringe wieder in ihre Einzelteile zerlegt und so auf den Außendurchmesser der Unterlage hinter den Stabendkappen eingefädelt. In richtiger Position werden die Ringsegmente dann schließlich wieder über die Paßstifte verbunden und mit einem geeigneten Kleber verklebt. So entsteht an der richtigen Stelle der Stützring bzw. zwei komplette Teilringe, wobei letztere insbesondere über einen Konus miteinander verspannt werden können. Die Gestaltung des Stützringes ist dabei so gewählt, daß man durch geeignete Teilung die gleiche Grundgeometrie für jede Größe und Gestalt eines Wickelkopfes einsetzen kann. Wie beschrieben, ist der geteilte Stützring innerhalb kurzer Zeit und mit relativ wenig Aufwand montierbar.

Eine bevorzugte Weiterbildung schlägt gemäß Anspruch 2 vor, daß die Berührungsfläche zwischen dem Innenring und dem Außenring in Axialrichtung gesehen konisch ist. Beim Einbau des geteilten Stützringes sorgt der konische Verschiebesitz für einen geometrisch exakten und spielfreien Sitz des Ringes auf den Unterlagestäben der Wicklungsstäbe. Der Konuswinkel kann dabei so eingestellt werden, daß eine sogenannte Selbsthemmung, d. h. Sicherheit gegen Verrutschen erzielt wird. Darüber hinaus ist der zweigeteilte Stützring nachspannbar. Sollten daher im Laufe des Betriebes Lockerungen auftreten, kann der Ring z. B. bei einer Revision innerhalb kurzer Zeit nachgespannt werden.

Zum Verspannen des Innenrings gegen den Außenring (oder umgekehrt) dienen gemäß der Weiterbildung in Anspruch 3 vorzugsweise separate Spannplatten, welche stirnseitig am Stützring anliegen und im Wesentlichen ringsegmentförmig ausgebildet sind. Zum Verspannen dienen entsprechende Bolzen, welche in den Spannplatten gelagert sind und in den Stützring eingreifen.

Wie zuvor bereits erwähnt, können gemäß der Weiterbildung in Anspruch 4 in Axialrichtung gesehen mehrere Ringebenen vorgesehen sein, wobei jede Teilringebene aus einzelnen Ringsegmenten zusammengesetzt ist.

Um die Ringsegmente des Stützringes bzw. der Teilringe für die Montage miteinander verbinden zu können, sind gemäß der Weiterbildung in Anspruch 5 Paßstifte vorgesehen, welche die einzelnen Elemente miteinander verbinden. Denn die einzelnen Ringsegmente werden als Einzelteile gefertigt, dann über Paßstifte zum Teilring miteinander verbunden, bevor sie dann in einer Karusselldrehbank auf Endmaß gedreht werden. Nach dem Zerlegen der Teilringe in ihre Einzelteile werden sie auf den Außendurchmesser der Unterlage hinter den Stabendkappen eingefädelt. In richtiger Position werden sie schließlich wieder über die Paßstifte verbunden und mit einem geeigneten Kleber verklebt.

Als technische Lösung bei einem Verfahren zum Sanieren des Wickelkopfes des Stators eines elektrischen Generators für die Stromgewinnung in Kraftwerken werden die Merkmale im Kennzeichen des Anspruchs 6 vorgeschlagen.

Dieses Reparaturverfahren hat den Vorteil, daß Reparaturen am Wickelkopf, die einen Ausbau des Stützringes erfordern, möglich sind, ohne daß der Stator neu gewickelt werden muß, was ein sehr aufwendiges Verfahren darstellen würde. Das Grundprinzip beim erfindungsgemäßen Sanierungsverfahren besteht darin, daß der vorhandene Stützring einfach entfernt wird und durch einen Stützring der zuvor beschriebenen Art ersetzt wird. Die Montage dieses erfindungsgemäßen Stützrings kann erfolgen, obwohl der Radialdurchmesser der Stabendkappe größer ist als der Innendurchmesser des Stützringes. Die Grundidee besteht - wie ausgeführt - darin, daß der Stützring aus Ringsegmenten zusammengesetzt ist, welche vor Ort, d. h. am bestehenden Wickelkopf montiert und zum fertigen Stützring zusammengesetzt werden.

Ein Ausführungsbeispiel eines elektrischen Generators für die Stromgewinnung in Kraftwerken im Bereich des Wickelkopfes mit dem erfindungsgemäßen Stützring wird nachfolgend anhand der Zeichnungen beschrieben. In diesen zeigt:
- Fig. 1: eine schematische Ansicht des Wickelkopfes mit montiertem Stützring;
- Fig. 2: eine perspektivische Teilansicht des Stützringes alleine;
- Fig. 3: einen Schnitt entlang der Linie A-A in Fig. 2.

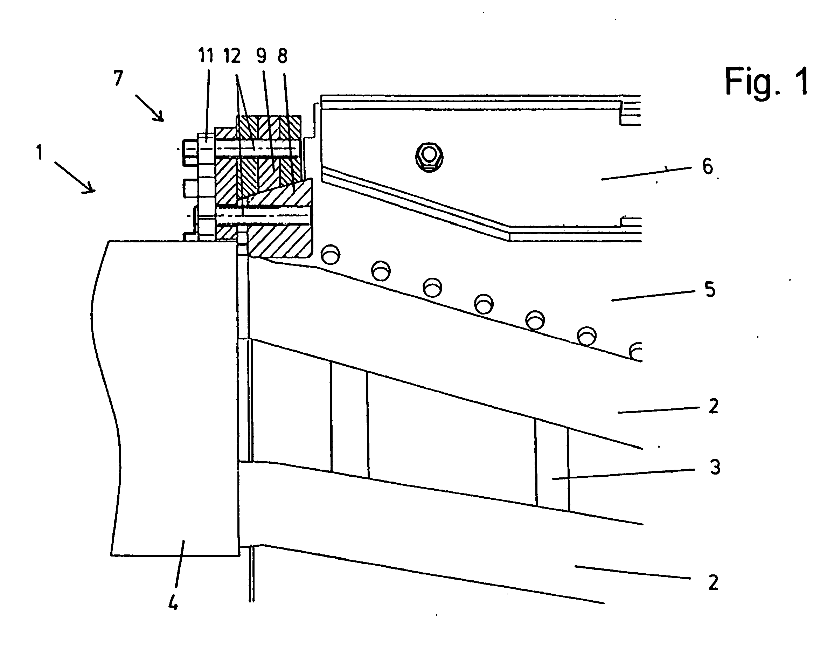

Fig. 1 zeigt das Ende eines elektrischen Generators für die Stromgewinnung in Kraftwerken mit einem Wickelkopf 1.

Der Wickelkopf 1 weist dabei Wicklungsstäbe 2 aus Oberlagestäben (unten) sowie Unterlagestäben (oben) auf, zwischen denen sich Distanzstücke 3 befinden. Die elektrische Verbindung der Wicklungsstäbe 2 am Stabende sieht eine Abdeckung in Form einer sogenannten Stabendkappe 4 zum Schutz der mechanischen Verbindungsteile vor. Weiterhin sind Trapezelemente 5 sowie Trapezträger 6 vorgesehen.

Es ist somit eine ausgedehnte, korbförmige Struktur des Wickelkopfes 1 mit seinen Wicklungsstäben 2 zu erkennen. Diese korbförmige Struktur ist im Betrieb, vor allem aber auch in Störfällen hohen elektromagnetischen Kräften ausgesetzt. Um für diese Fälle unzulässig hohe Verformungen des Wickelkopfes 1 vorzubeugen, ist um den Außendurchmesser der Unterlagestäbe der Wicklungsstäbe 2 herum ein Stützring 7 angeordnet, der auf den Unterlagestäben aufliegt und einer unzulässigen radialen Aufweitung entgegenwirkt.

Der Aufbau und die technische Montage dieses Stützringes 7 soll anhand einer Sanierung des Wickelkopfes 1 beschrieben werden, bei welcher der Zugang zur Reparaturstelle nur durch den Ausbau des vorhandenen Stützringes erfolgen kann. Es wird dabei vorausgesetzt, daß es sich bei diesem vorhandenen Stützring um einen einstückigen Stützring handelt, der mit seinem Innendurchmesser geringer ausgebildet ist als der Außendurchmesser der Stabendkappe 4. Dies bedeutet, daß dieser Stützring für den Ausbau zerstört werden muß. Für den Wiedereinbau ist deshalb eine andersartige Konstruktion des Stützringes erforderlich als beim Neubau. Genau um diese Konstruktion des erfindungsgemäßen Stützringes 7 geht es.

Der erfindungsgemäße Stützring 7 besteht grundsätzlich aus einem Innenring 8 und aus einem Außenring 9. Die Berührungsflächen sind dabei konisch ausgebildet. Sowohl der Innenring 8 als auch der Außenring 9 besteht aus - in Umfangsrichtung gesehen - einzelnen Ringsegmenten 10.

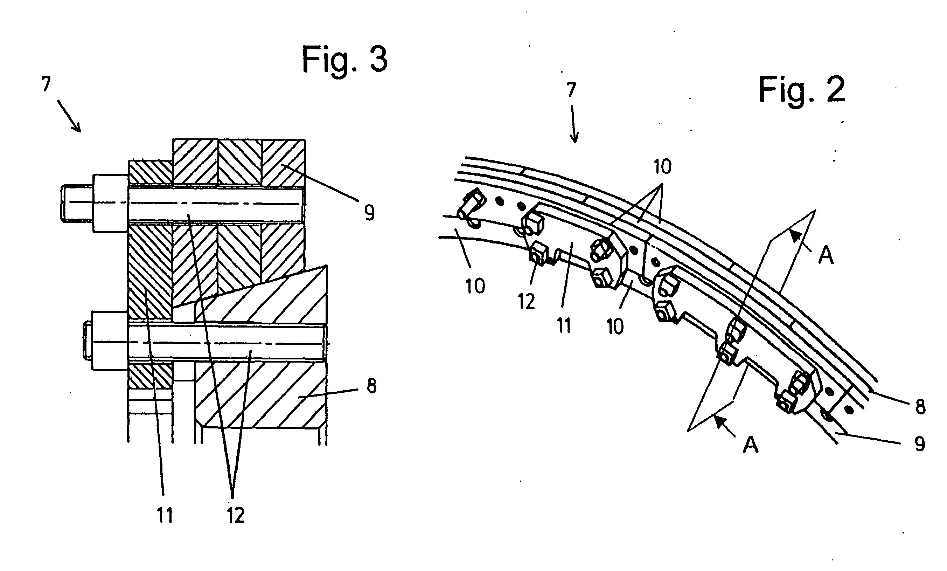

Darüber hinaus besteht der Außenring 9 aus drei Ringebenen, wobei jede dieser drei Ringebenen durch die vorbeschriebenen Ringsegmente 10 gebildet ist. Die Ringsegmente 10 der unterschiedlichen Ringebenen sind dabei auf Lücke angeordnet. Zum Verspannen des Innenrings 8 mit dem Außenring 9 dienen ringsegmentförmige Spannplatten 11, wie sie insbesondere in Fig. 2 erkennbar sind. Zum eigentlichen Verspannen dienen Verspannungsbolzen 12.

Die Montage des Stützrings 7 ist wie folgt:

Die einzelnen Ringsegmente 10 werden als Einzelteile gefertigt. Sie werden anschließend außerhalb des Wickelkopfes 1 über Paßstifte entweder zum Innenring 8 oder zum Außenring 9 miteinander verbunden. Der Innenring 8 bzw. der Außenring 9 kann dann in einer Karusselldrehbank auf das Endmaß gedreht werden. Anschließend werden die Ringe 8, 9 wieder in ihre Einzelteile zerlegt.

Anschließend können die Einzelteile am Wickelkopf 1 auf den Außendurchmesser der Unterlage hinter der Stabendkappe eingefädelt werden. In richtiger Position werden sie schließlich wieder über Paßstifte verbunden und mit einem geeigneten Kleber verklebt. So entstehen an der richtigen Stelle am Wickelkopf 1 zwei komplette Teilringe, nämlich der Innenring 8 und der Außenring 9. Diese beiden Teilringe können über den Konus mittels der Verspannungsbolzen 12 und den Spannplatten 11 miteinander verspannt werden.

### Bezugszeichenliste

- 1: Wickelkopf
- 2: Wicklungsstäbe
- 3: Distanzstück
- 4: Stabendkappe
- 5: Trapezelement
- 6: Träpezträger
- 7: Stützring
- 8: Innenring
- 9: Außenring
- 10: Ringsegment
- 11: Spannplatte
- 12: Verspannungsbolzen

## Patentansprüche

1. Elektrischer Generator für die Stromgewinnung in Kraftwerken,
dessen Wickelkopf (1) radial innenliegende Wicklungsstäbe (2) sowie einen radial außen an den Wicklungsstäben (2) anliegenden Stützring (7) aufweist,
wobei der Stützring (7) in Umfangsrichtung gesehen aus einzelnen Ringsegmenten (10) zusammengesetzt ist,
**dadurch gekennzeichnet,**
**daß** der Stützring (7) aus einem Innenring (8) und aus einem Außenring (9) zusammengesetzt ist,
wobei Innenring (8) und Außenring (9) gegeneinander verspannt sind und
wobei Innenring (8) und Außenring (9) jeweils in Umfangsrichtung gesehen aus einzelnen Ringsegmenten (10) zusammengesetzt sind.

2. Elektrischer Generator nach dem vorhergehenden Anspruch,
**dadurch gekennzeichnet,**
**daß** die Berührungsfläche zwischen dem Innenring (8) und dem Außenring (9) in Axialrichtung gesehen konisch ausgebildet ist.

3. Elektrischer Generator nach einem der vorhergehenden Ansprüche,
**dadurch gekennzeichnet,**
**daß** zum Verspannen des Innenrings (8) gegen den Außenring (9) - oder umgekehrt - stirnseitig anliegende, im wesentlichen ringsegmentförmige Spannplatten (11) mit Verspannbolzen (12) vorgesehen sind.

4. Elektrischer Generator nach einem der vorhergehenden Ansprüche,
**dadurch gekennzeichnet,**
**daß** der Stützring (7) und/oder der Innenring (8) und/oder der Außenring (9) in Axialrichtung gesehen mehrere Ringebenen aus in Umfangsrichtung gesehen einzelnen Ringsegmenten besteht, wobei die Ringsegmente (10) der Ebenen auf Lücke angeordnet sind.

5. Elektrischer Generator nach einem der vorhergehenden Ansprüche,
**dadurch gekennzeichnet,**
**daß** die Ringsegmente (10) auf Paßstifte aufgesteckt sind.

6. Verfahren zum Sanieren des Wickelkopfes (1) des Stators eines elektrischen Generators für die Stromgewinnung in Kraftwerken,
wobei der Wickelkopf (1)
mit radial innenliegenden Wicklungsstäben (2) sowie
mit einem radial außen an den Wicklungsstäben (2) anliegenden Stützring (7) versehen ist,
**dadurch gekennzeichnet,**
**daß** der vorhandene Stützring (7) entfernt wird und nach der Sanierung des Wickelkopfes (1) durch einen Stützring (7) der Ansprüche 1 bis 5 ersetzt wird.

## Claims

1. Electric generator for power generation in power stations, the winding head (1) of which has radially inner winding rods (2) and a radially outer support ring (7) lying on the winding rods (2), wherein the support ring (7) viewed in the peripheral direction comprises individual ring segments (10), **characterised in that** the support ring (7) comprises an inner ring (8) and an outer ring (9), wherein the inner ring (8) and outer ring (9) are clamped against each other and wherein the inner ring (8) and outer ring (9) viewed in the peripheral direction each comprise individual ring segments (10).

2. Electric generator according to the preceding claim, **characterised in that** the contact surface between the inner ring (8) and the outer ring (9), viewed in the axial direction, is formed conical.

3. Electric generator according to any of the preceding claims, **characterised in that** to clamp the inner ring (8) against the outer ring (9) - or vice versa - are provided, lying on the face side, substantially ring-segment-like clamping plates (11) with clamping bolts (12).

4. Electric generator according to any of the preceding claims, **characterised in that** the support ring (7) and/or the inner ring (8) and/or the outer ring (9), viewed in the axial direction, comprise several ring planes of individual ring segments viewed in the peripheral direction, wherein the ring segments (10) of the planes are arranged with gaps.

5. Electric generator according to any of the preceding claims, **characterised in that** the ring segments (10) are pushed onto alignment pins.

6. Method for cleaning the winding head (1) of a stator of an electric generator for power generation in power stations, wherein the winding head (1) is fitted with radially inner winding rods (2) and with a radially outer support ring (7) lying on the winding rods (2), **characterised in that** the existing support ring (7) is removed and after cleaning the winding head (1) replaced by a support ring (7) according to claims 1 to 5.

## Revendications

1. Générateur électrique pour la production de courant dans les centrales électriques,
dont la tête d'enroulement (1) présente des barres d'enroulement (2) radialement intérieures ainsi qu'une bague d'appui (7) s'appliquant radialement extérieurement sur les barres d'enroulement (2),
la bague d'appui (7) étant composée, vu en direction circonférentielle, de segments annulaires individuels (10),
**caractérisé en ce**
**que** la bague d'appui (7) est composée d'une bague intérieure (8) et d'une bague extérieure (9),
bague intérieure (8) et bague extérieure (9) étant serrées l'une contre l'autre et bague intérieure (8) et bague extérieure (9) étant composée chacune, vu en direction circonférentielle, de segments annulaires individuels (10).

2. Générateur électrique selon la revendication précédente,
**caractérisé en ce**
**que**, vue en direction axiale, la surface de contact entre la bague intérieure (8) et la bague extérieure (9) est conique.

3. Générateur électrique selon une des revendications précédentes,
**caractérisé en ce**
**que** pour serrer la bague intérieure (8) contre la bague extérieure (9) - ou vice versa - il est prévu des plaques de serrage (11) appliquées côté frontal, essentiellement en forme de segments annulaires, avec des boulons de serrage (12).

4. Générateur électrique selon une des revendications précédentes,
**caractérisé en ce**
**que** la bague d'appui (7) et/ou la bague intérieure (8) et/ou la bague extérieure (9) présentent, vu en direction axiale, plusieurs plans annulaires composés, vu en direction circonférentielle, de segments annulaires individuels, les segments annulaires (10) des plans étant disposés en quinconce.

5. Générateur électrique selon une des revendications précédentes,
**caractérisé en ce**
**que** les segments annulaires (10) sont montés sur des goujons de positionnement.

6. Procédé pour rénover la tête d'enroulement (1) du stator d'un générateur électrique pour la production de courant dans les centrales électriques,
dans lequel la tête d'enroulement (1)
est pourvue de barres d'enroulement (2) radialement intérieures ainsi que d'une bague d'appui (7) s'appliquant radialement extérieurement sur les barres d'enroulement (2),
**caractérisé en ce**
**que** la bague d'appui (7) existante est démontée et, après rénovation de la tête d'enroulement (1), remplacée par une bague d'appui (7) selon les revendications 1 à 5.
